# EUROPÄISCHE PATENTANMELDUNG

(11) **EP 1 659 287 A2**
(43) Veröffentlichungstag der Anmeldung: **24.05.2006**
(21) Anmeldenummer: 05023628.0
(22) Anmeldetag: 28.10.2005
(51) Int. Cl.: F03D 11/00

(54) **Vorrichtung und Verfahren zur Funktionsprüfung einer Windenergieanlage**

(30) Priorität: 17.11.2004 DE 102004056223
(71) Anmelder: NORDEX ENERGY GmbH, 22848 Norderstedt (DE)
(72) Erfinder: Schubert, Thomas, 25479 Ellerau (DE); Hester, Robert, 22305 Hamburg (DE)
(74) Vertreter: Hauck, Graalfs, Wehnert, Döring, Siemons

(57) **Zusammenfassung**

Verfahren zur Funktionsprüfung einer Windenergieanlage, das die folgenden Verfahrensschritte aufweist:
- eine Steuereinheit für die Windenergieanlage liest Istwerte von mindestens einem Bauteil der Windenergieanlage ein und generiert Steuersignale für Aktuatoren der Windenergieanlage,
- eine Simulationseinheit weist mindestens einen Eingang und mindestens einen Ausgang sowie eine oder mehrere mathematische Modelle auf, die das Verhalten von einem oder mehreren Bauteilen der Windenergieanlage abbilden, an dem Eingang der Simulationseinheit liegen die Steuersignale an und an dem Ausgang der Simulationseinheit liegen die modellierten Istwerte der Modelle zu den Bauteilen, wobei die Istwerte der Simulationseinheit an dem Eingang der Steuereinheit anliegen und die Steuersignale der Steuereinheit an dem Eingang der Simulationseinheit anliegen,
- die Simulationseinheit modelliert für vorbestimmte Ausgangsbedingungen die sich für die anliegenden Steuersignale ergebenden Istwerte der Bauteile.

## Beschreibung

Die vorliegende Erfindung betrifft ein Verfahren und eine Vorrichtung zur Funktionsprüfung einer Windenergieanlage sowie eines Windparks.

Windenergieanlagen, insbesondere Anlagen mit mehreren Megawatt Leistung, sind heute mit einer komplexen Steuerung und Regelung versehen. Neben den in der Windenergieanlage zusammengefaßten einzelnen Baugruppen, die selbst wiederum komplexe Anlagen bilden, verfügen die Windenergieanlagen über eine ausgefeilte Steuerungssoftware. Die Steuerung legt fest, wie die Windenergieanlage betrieben wird, welche Betriebszustände zulässig sind, welche Ereignisse und Zustände fehlerhaft sind und wie die Anlage auf diese Fehler reagiert. Neben der Betriebssicherheit und einem reibungslosen Betrieb der Windenergieanlage besteht auch eine zentrale Aufgabe der Steuerungssoftware darin, die Windernte und die Lebensdauer der Anlage zu optimieren. Zur Prüfung der Steuerung sind verschiedene Ansätze bekannt. Einer dieser Ansätze ist die formale Verifikation des Steuerverfahrens, bei der sowohl Steueraufgaben als auch Steuerungsalgorithmen formalisiert werden und beispielsweise auf interpretierte Petrinetze oder durch Net-Condition/Event-Systeme abgebildet werden. Die Verifikation erfolgt dann durch die Analyse der Netze bzw. der Systeme. Solche Verifikationsverfahren eignen sich insbesondere, um nicht erfüllte Schaltbedingungen, Widersprüche im Steuerungsablauf und nicht determinierte Steuerzustände aufzudecken.

Ein anderer Ansatz, der ergänzend zur Verifikation der Steuerung gewählt werden kann, besteht in einem Testen der Steuerung. Unter Testen versteht man hierbei die Ausführung der Steuerungssoftware unter bestimmten Bedingungen mit dem Ziel, Fehler zu entdecken.

Bei Windenergieanlagen, als komplexen Systemen, besteht nicht nur das Bedürfnis nach einer Funktionsprüfung der Steuerung, sondern auch nach einer geeigneten Funktionsprüfung für die Teilsysteme der Windenergieanlage. Hierzu gehören insbesondere Rotor, Getriebe, Generator, Pitchsystem, Azimutsystem, mechanisches Bremssystem und Hydrauliksystem. Auch für diese Systeme besteht das Bedürfnis, gezielt die Funktionalität einzelner Systeme zu testen. Bei Windparks ist insbesondere die Funktionsprüfung der Windparksteuerung und -regelung im Zusammenspiel mit allen im Windpark zusammengefaßten Windenergieanlagen, Betriebsmitteln wie z. B. Transformatoren, Kabel oder Freileitungen sowie den Mittel- und Hochspannungsschaltanlagen am Netzverknüpfungspunkt des Windparks von Nöten.

Der Erfindung liegt die technische Aufgabe zugrunde, ein Verfahren zur Funktionsprüfung bei einer Windenergieanlage oder bei einem Windpark bereitzustellen, das mit einfachen Mitteln ein zuverlässiges Testen der Steuerung zuläßt.

Die erfindungsgemäße Aufgabe wird durch eine Vorrichtung mit den Merkmalen aus Anspruch 1 gelöst. Vorteilhafte Ausgestaltungen bilden die Gegenstände der Unteransprüche.

Das erfindungsgemäße Verfahren arbeitet mit einer Steuereinheit und mindestens einer Simulationseinheit. Die Steuereinheit ist zur Betriebssteuerung einer Windenergieanlage vorgesehen und liest Istwerte von mindestens einem Bauteil der Windenergieanlage ein und generiert Steuersignale für mindestens einen Aktuator der Windenergieanlage. Die Simulationseinheit besitzt mindestens einen Ausgang und mindestens einen Eingang sowie ein oder mehrere mathematische Modelle, die das Verhalten von einem oder mehreren Bauteilen der Windenergieanlage abbilden. Mathematische Modelle umfassen im weitesten Sinne auch analytische und physikalische Modelle, die numerische Werte als Ergebnisgröße erzeugen. An dem Eingang der Simulationseinheit liegen Steuersignale an und an dem Ausgang die durch die Modelle simulierten Istwerte von Bauteilen der Windenergieanlage. Simulationseinheit und Steuereinheit sind derart miteinander verbunden, daß die Istwerte von der Simulationseinheit an dem Eingang der Steuereinheit und die Steuersignale der Steuereinheit an dem Eingang der Simulationseinheit anliegen. Während das erfindungsgemäße Verfahren abläuft, modelliert die Simulationseinheit für vorbestimmte Ausgangsbedingungen die sich für die anliegenden Steuersignale ergebenden Istwerte für die Bauteile. Bei dem erfindungsgemäßen Verfahren tritt für die Steuerung die Simulationseinheit an die Stelle der mit Sensoren und Aktuatoren versehenen Windenergieanlage. Das vorliegende Verfahren erlaubt eine schnelle und zuverlässige Funktionsprüfung einer Steuerung für eine Windenergieanlage. Hierdurch wird der für die Inbetriebnahme der Windenergieanlage notwendige Zeitaufwand deutlich reduziert, da für die Anlage das Testen der Steuerung separat durchgeführt werden kann. Auch die Entwicklungszeiten bei Modifikationen an der Anlage oder an der Steuerung verkürzen sich. Zudem lassen sich auf diese Weise Testszenarien durchspielen, die aus Sicherheitsgründen nicht an einer realen Windenergieanlage testbar oder sogar technisch nicht durchführbar sind.

In einer bevorzugten Ausgestaltung ist die Simulationseinheit in der Lage, Istwerte zu der Windenergieanlage entsprechend zu den anliegenden Steuersignalen in Echtzeit zu generieren. Das heißt, die von der Simulationseinheit gelieferten Istwerte entsprechen nicht nur in ihren Werten den an der Windenergieanlage tatsächlich auftretenden Werten, sondern auch in ihrem zeitlichen Verlauf.

Windenergieanlagen arbeiten nicht unter konstanten Umweltbedingungen, sondern sind wechselnden Wetterbedingungen mit unterschiedlicher Temperatur, Windgeschwindigkeit und Windrichtung ausgesetzt. In einer bevorzugten Ausgestaltung modelliert die Simulationseinheit das Verhalten des oder der Bauteile für von außen vorgegebene Parameter. Hier ist es auch möglich, von außen vorgegebene zeitliche Abläufe für die Parameter zu verwenden. So kann beispielsweise eine zeitlich zunehmende Windgeschwindigkeit oder sich eine zeitlich ändernde Luftdichte vorgegeben werden, um das entsprechende Verhalten der Steuerung hierauf testen zu können. In einer anderen vorteilhaften Ausgestaltung, die alternativ oder zusätzlich zu dem Festlegen von äußeren Parametern eingesetzt werden kann, modelliert die Simulationseinheit das Verhalten von Bauteilen für vorbestimmte Istwerte oder vorbestimmte Verläufe von Istwerten. Hierdurch kann beispielsweise das Systemverhalten für konstante Drehzahl, konstante Last oder andere vorgegebene Größen simuliert werden. Insbesondere besteht hier die Möglichkeit, beim Auftreten eines Fehlers an der Windenergieanlage, diese gezielter zu analysieren.

In einer zweckmäßigen Weiterbildung des erfindungsgemäßen Verfahrens besitzt die Simulationseinheit ein Rotormodell, das das Rotordrehmoment abhängig von der Schnellaufzahl und dem Istwert für die Pitchwinkel bestimmt. Die Rotordrehzahl wird anschließend in Abhängigkeit der Drehmomentenbilanz an der Rotorwelle und dem Massenträgheitsmoment des Rotors bestimmt.

Die erfindungsgemäße Aufgabe wird ebenfalls durch eine Vorrichtung zur Durchführung des Verfahrens nach einem der vorangegangenen Ansprüche gelöst.

Bei der Vorrichtung besitzt die Simulationseinheit eine Datenverarbeitungseinrichtung, die einen Anschluß für die Steuereinheit besitzt, um Ein- und Ausgänge der Steuereinheit für die Windenergieanlage mit der Simulationseinheit zu verbinden. Bevorzugt besitzt die Simulationseinheit Anschlüsse für die Verbindung mit einer in die Windenergieanlage integrierten Steuereinheit.

Die technische Aufgabe wird ebenfalls durch ein Verfahren zur Funktionsprüfung von mehreren Windenergieanlagen gelöst, die in einem Windpark zusammengefaßt sind. Bei dem erfindungsgemäßen Verfahren ist ebenfalls eine Simulationseinheit und eine Steuereinheit vorgesehen. Die Simulationseinheit besitzt ein Modell für die Übertragungseigenschaften aller elektrischen Betriebsmittel des Stromnetzes eines Windparks und ferner Modelle für die elektrischen Eigenschaften von Windenergieanlagen, die an das Stromnetz in dem Windpark angeschlossen sind. Die Steuereinheit für das elektrische Netz in dem Windpark liest Istwerte zu den elektrischen Zuständen des Windparks am Übergabepunkt zwischen Windpark und Stromnetz des Netzbetreibers ein und generiert Steuersignale für die elektrischen Betriebsmittel der Windenergieanlagen in dem Windpark. Bei dem erfindungsgemäßen Verfahren modelliert die Simulationseinheit für vorbestimmte Anfangsbedingungen die sich bei den anliegenden Steuersignalen ergebenden Istwerte der elektrischen Zustände der Windenergieanlagen und des Stromnetzes des Windparks. Als Steuereinheit kann ein sogenanntes Windpark-Management vorgesehen sein, das durch Zugriff auf die elektrischen Betriebsmittel der einzelnen Windenergieanlagen versucht, die gewünschten elektrischen Eigenschaften für den Windpark zu erzielen.

Die vorliegende Erfindung wird nachfolgend anhand von mehreren Ausführungsbeispielen näher erläutert. Es zeigt:
- Fig.: 1 den schematischen Aufbau einer Windenergieanlage mit den für das Verfahren verwendeten Istwerten und Steuersignalen,
- Fig. 2: den schematischen Aufbau der Einheit zur Funktionsprüfung,
- Fig. 3: den schematischen Aufbau der Simulationseinheit für die Funktionsprüfung einer Windenergieanlage,
- Fig. 4: den Aufbau für eine Funktionsprüfung bei einem Windpark mit mehreren Windenergieanlagen.

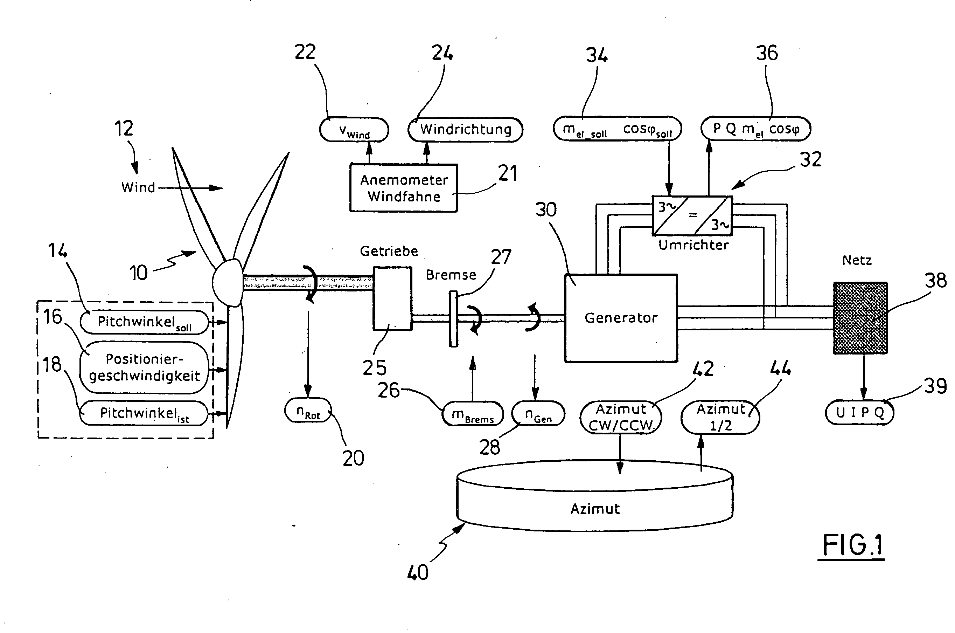

Fig. 1 zeigt schematisch den Aufbau der Windenergieanlage mit einem Rotor 10, der von der Luft 12 angeströmt wird. Der Rotor verfügt über ein sogenanntes Pitchsystem, mit dem jedes einzelne Rotorblatt um seine Längsachse verstellbar ist. Hierdurch ändert sich der Anströmwinkel des Rotorblatts und somit das an dem Rotorblatt wirkende Drehmoment. Neben der Vorgabe des Pitchwinkels als Sollgröße für das Pitchsystem kann auch die Positioniergeschwindigkeit 16 als Steuersignal dem Pitchsystem vorgegeben werden. Istgröße für das Pitchsystem ist der aktuelle Pitchwinkel 18. Das Pitchsystem bietet sich an, mit seinen Istwerten und Steuersignalen als Modell in der Simulationseinheit abgebildet zu werden. Hierbei können auch weitere Parameter, wie beispielsweise Schwingungen im Rotorblatt, Trägheit, Volumenausdehnung und ähnliche Phänomene berücksichtigt werden, um das reale Verhalten des Pitchsystem zu modellieren.

Eine weitere relevante Größe, die auch in einer Steuerung zu berücksichtigen ist und durch die Simulationseinheit modelliert wird, ist die Drehzahl 20 an der Getriebeeingangswelle, sofern ein Getriebe vorgesehen ist. Neben der Rotordrehzahl 20 ist eine weitere zentrale Größe das Rotormoment (nicht eingezeichnet). Das Rotormoment hängt physikalisch von dem Wind, dem Blattwinkel und der Drehzahl ab. Bei einer genauen Analyse kommen weitere Abhängigkeiten hinzu, wie beispielsweise Rotorblattprofil, Oberflächenbeschaffenheit der Rotorblätter, Rotorblattdynamik, Höhenprofil eines Windfeldes, Fliehkrafteinwirkung, Turmumströmung, Schwerkraftanregung der Rotorblätter, Kräfte bei Azimutverstellungen, Windturbulenzen und Böen sowie Strömungsablösungen am Blatt. Diese Größen können einzeln oder in Kombination je nach vorhandener Modellgenauigkeit und gewünschter Modelltiefe berücksichtigt werden. Hierbei müssen als erfaßte Istwerte die von den Windsensoren (Anemometer und Windfahne) 21 erfaßten Größen für Windgeschwindigkeit 22 und Windrichtung 24 berücksichtigt werden. Bei den Größen 22 und 24 handelt es sich um externe Parameter, die nicht durch die Windenergieanlage und deren Steuerung beeinflußt werden, sondern als externe Vorgaben von der Simulationseinheit berücksichtigt werden.

Nach einem eventuell vorhandenen Getriebe 25 folgt mit der Getriebeabgangswelle die Generatoreingangswelle, die mit einer Bremse 27 versehen ist. Die Bremse wird mit einem Bremsmoment 26 betätigt, das zu einer Generatordrehzahl 28 führt. Statt der Generatordrehzahl kann auch hier wieder das am Generator 30 anliegende Moment betrachtet werden.

Die elektrischen Betriebsmittel mit dem Umrichter 32 besitzen als Steuersignale beispielsweise einen vorgegebenen Leistungsfaktor cos*ϕ* ₛₒₗₗ sowie einen Sollwert für das elektrisch erzeugte Generatordrehmoment m_{el_soll}. Als Istwerte für den Umrichter werden durch ein Modell zu den elektrischen Betriebsmitteln die Wirkleistung P, die Blindleistung Q, der erreichte Leistungsfaktor cos *ϕ* sowie das tatsächliche elektrisch erzeugte Drehmoment am Generator mₑₗ erfaßt. Die Steuersignale sind mit 34 gekennzeichnet, die sich ergebenden Istwerte sind mit 36 gekennzeichnet. Ferner kann noch ein Modell für den Netzanschluß 38 vorgegeben sein, das als Istgrößen 39 die Spannung U, den Strom I sowie Wirk- und Blindleistung P, Q ausgibt.

Neben den vorgeschriebenen Größen kann noch ein Modell für das Azimutsystem 40 vorgesehen sein. Das Azimutsystem besitzt gesteuerte Antriebe. An dem Zahnkranz des Azimutsystems sind zwei induktive Nährungsschalter angeordnet, die jeweils ein Signal senden, wenn ein Zahn in der Nähe des Schalters ist, und eine Null, wenn der Nährungsschalter auf einen Zahnzwischenraum zeigt. Zur Bestimmung der aktuellen Winkelposition werden die Nährungsschalter eingesetzt, deren Signale als Azimut 1/2 44 bezeichnet sind. Das Azimutsystem erhält als Eingangsgröße die gewählte Drehrichtung 42 mit den Signalen CW (clockwise) oder CCW (counter-clockwise).

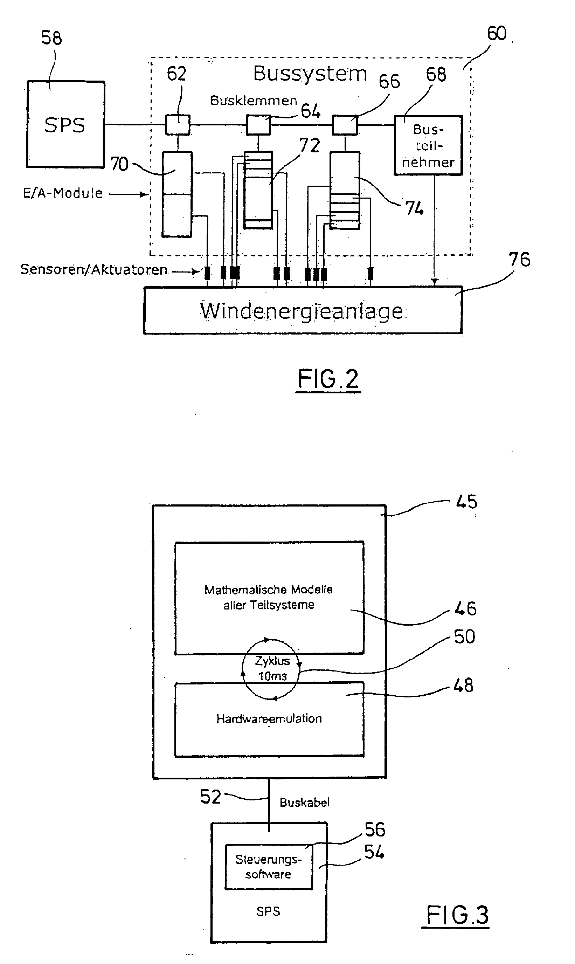

Bei dem erfindungsgemäßen Verfahren werden nun wie in Fig. 3 dargestellt, die vorstehenden Modelle mit ihren Istwerten und Steuersignalen unterschiedlich zusammengefaßt und mathematisch abgebildet. Die abgebildeten Modelle sind in der Simulationseinheit 45 zusammengefaßt. Die Simulationseinheit 45 besitzt mathematische Modelle 46, die je nach gewünschter Komplexität das Verhalten der Teilsysteme beschreiben. Diese Modelle müssen nicht unbedingt als analytische Modelle vorliegen, für die Erfindung reicht es auch aus, wenn die Simulationseinheit mit vereinfachten Modellen oder gar mit Kennfeldern und/oder Kennlinien aus Messungen arbeitet. Die Simulationseinheit 45 besitzt ferner eine Hardwareemulation 48, die Daten mit den Modellen zu den Teilsystemen austauschen. Je nach Komplexität der Systeme kann hier eine Austauschzeit von 10 Millisekunden beispielsweise erreicht werden. Die Simulationseinheit 45, die nun die am System erzeugten Istwerte modelliert, leitet über einen Busanschluß 52 diese an eine Steuerungseinheit 54 weiter. In der Steuerungseinheit 54 läuft eine Steuerungssoftware 56 ab, die auch bei der Steuerung einer nicht simulierten Windenergieanlage eingesetzt wird.

Als Plattform für das Simulationsprogramm wird hier bevorzugt das Programm WinMOD eingesetzt. Die Simulationseinheit 45 bildet dann das physikalische Verhalten der Windenergieanlage realitätsnah und unter Echtzeitbedingungen nach, so daß die Eigenschaften des Steuerungssystems 54, das eine Steuerungssoftware sowie eine speicherprogrammierbare Steuerung (SPS) aufweist, getestet wird. Das erfindungsgemäße Verfahren läßt sich ebenfalls an Fig. 2 verdeutlichen. Eine Steuerung 58 steuert über ein Bussystem 60 einzelne Komponenten 62, 64, 66 und sonstige Busteilnehmer 68. Über einzelne E/A-Module 70 bis 74 kommunizieren die Untersysteme mit Sensoren und Aktuatoren der Windenergieanlage 76. Bei dem erfindungsgemäßen Verfahren wird die Windenergieanlage 76 nunmehr durch eine Simulationseinheit ersetzt, die die Signale der Sensoren und das Verhalten des Systems auf die Aktuatoren simuliert. Hierdurch kann die Steuerung sehr genau und, bei einer entsprechend ausgelegten Simulationseinheit, unter Echtzeitbedingungen getestet werden. Auch können bei vorliegenden Fehlern oder Fehlerverhalten durch gezieltes Anfahren von Betriebszuständen mit den simulierten Istwerten das Verhalten der Steuerung in konkreten Situationen getestet werden.

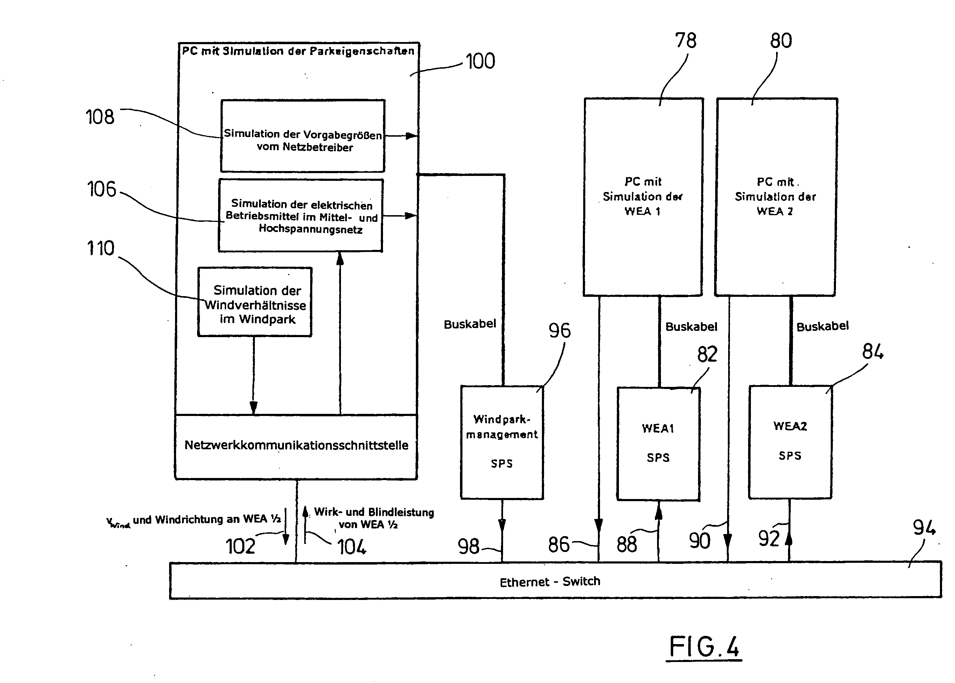

Fig. 4 zeigt ein Ausführungsbeispiel des erfindungsgemäßen Verfahrens, bei dem ein Windenergiepark simuliert wird. Bei dem Verfahren werden in einzelnen Simulationseinheiten 78, 80 zusammen mit den zugehörigen Steuereinheiten 82 und 84 die elektrischen Betriebsmittel der Windenergieanlagen simuliert. Die einzelnen Komponenten 78 und 80 erzeugen mit den Signalen 86 und 90 die Istwerte für die elektrischen Betriebsmittel, die an einen Ethemet-Switch 94 weitergeleitet werden. Über den Ethernet-Switch 94 empfangen die Steuerungen 82 und 84 Steuersignale 88, 92 für den Betrieb der Windenergieanlage. Generiert werden die Steuersignale für die einzelnen Windenergieanlagen von einer Steuereinheit 96, die durch die übergeordnete Steuerung der einzelnen Windenergieanlagen die Aufgabe eines Windpark-Managers übernimmt. Die Steuersignale 98 der Steuerung 96 werden an den Ethernet-Switch 94 weitergeleitet. In der Simulationseinheit 100 erfolgen mehrere Teilschritte. Einerseits gibt die Simulationseinheit 100 Windgeschwindigkeit und Windrichtung als Daten 102 vor, die an dem Ethemet-Switch 94 bereitstehen. Eingangsgröße zu der Simulationseinheit bilden Wirk- und Blindleistung 104 sowie weitere elektrische Zustandsgrößen der einzelnen Windenergieanlage. Die Eingangsgrößen werden in der Nahsimulation der elektrischen Betriebsmittel im Mittel- und Hochspannungsnetz des Windparks 106 verarbeitet. Hierbei werden auch elektrische Last- und Störfälle, das Verhalten der Mittel- und Hochspannungsschaltanlagen sowie ferner mit 108 die Vorgabegrößen der Netzbetreiber mit berücksichtigt. Das Verhalten der genannten Schaltanlagen schließt das Verhalten der dort ggf. vorhandenen Schutzrelais, Leistungstrenner, Einbruchsmeldeanlage, kWh- und kVArh-Zähler, Automatisierungseinheit sowie eventuell vorhandene Kompensationseinheiten für reaktive elektrische Leistung mit ein. Gleichzeitig kann in der Simulationseinheit 100 noch eine Simulation 110 der Wind- und Sonnenstandverhältnisse im Windpark folgen. Hierdurch kann beispielsweise die Topologie der Aufstellung der einzelnen Windenergieanlagen noch berücksichtigt und für das Windparkmanagement zum einen getestet werden, wie gut bei unterschiedlichen Topologien sich insgesamt die Vorgaben der Netzbetreiber einhalten lassen und zum anderen, wie sich durch Schattenwurfszenarien ausgelöste Windenergieanlagenabschaltungen auswirken.

## Patentansprüche

1. Verfahren zur Funktionsprüfung einer Windenergieanlage, das die folgenden Verfahrensschritte aufweist:
- eine Steuereinheit (54) für die Windenergieanlage liest Istwerte von mindestens einem Bauteil der Windenergieanlage ein und generiert Steuersignale für Aktuatoren der Windenergieanlage,
- eine Simulationseinheit (45) weist mindestens einen Eingang und mindestens einen Ausgang sowie eine oder mehrere mathematische Modelle auf, die das Verhalten von einem oder mehreren Bauteilen der Windenergieanlage abbilden, an dem Eingang der Simulationseinheit liegen die Steuersignale an und an dem Ausgang der Simulationseinheit liegen die modellierten Istwerte der Modelle zu den Bauteilen, wobei die Istwerte der Simulationseinheit an dem Eingang der Steuereinheit anliegen und die Steuersignale der Steuereinheit an dem Eingang der Simulationseinheit anliegen,
- die Simulationseinheit modelliert für vorbestimmte Ausgangsbedingungen die sich für die anliegenden Steuersignale ergebenden Istwerte der Bauteile.

2. Verfahren nach Anspruch 1, **dadurch gekennzeichnet, daß** die Simulationseinheit die Istwerte zu den anliegenden Steuersignalen in Echtzeit generiert.

3. Verfahren nach Anspruch 1 oder 2, **dadurch gekennzeichnet, daß** die Simulationseinheit das Verhalten des oder der Bauteile für von außen vorgegebene Parameter modelliert.

4. Verfahren nach Anspruch 3, **dadurch gekennzeichnet, daß** für die von außen vorgegebenen Randbedingungen zeitliche Abläufe für die von außen vorgegebenen Parameter verwendet werden.

5. Verfahren nach einem der Ansprüche 1 bis 4, **dadurch gekennzeichnet, daß** die Simulationseinheit das Verhalten der Bauteile für vorbestimmte Istwerte oder vorbestimmte Verläufe von Istwerten modellieren kann.

6. Verfahren nach einem der Ansprüche 1 bis 5, **dadurch gekennzeichnet, daß** die Simulationseinheit ein Rotormodell aufweist, das das Rotormoment abhängig von der Schnellaufzahl und dem Istwert für einen Pitchwinkel bestimmt.

7. Vorrichtung zur Durchführung des Verfahrens nach einem der Ansprüche 1 bis 6, **dadurch gekennzeichnet, daß** die Simulationseinheit eine Datenverarbeitungseinrichtung aufweist, die einen Anschluß für die Steuereinheit besitzt, um Ein- und Ausgänge der Steuereinheit mit der Simulationseinheit zu verbinden.

8. Vorrichtung nach Anspruch 7, **dadurch gekennzeichnet, daß** die Simulationseinheit Anschlüsse für die Verbindung mit einer in die Windenergieanlage integrierten Steuereinheit aufweist.

9. Verfahren zur Funktionsprüfung von mehreren Windenergieanlagen, die in einem Windpark zusammengefaßt sind, das die folgenden Schritte aufweist:
- eine Simulationseinheit besitzt ein Modell für Übertragungseigenschaften von elektrischen Betriebsmitteln eines Spannungsnetzes in dem Windpark und ferner Modelle für die elektrischen Eigenschaften der einzelnen Windenergieanlagen, die an das Spannungsnetz in dem Windpark angeschlossen sind,
- eine Steuereinheit für das elektrische Netz in dem Windpark liest Istwerte zu den elektrischen Zuständen der einzelnen Windenergieanlagen ein und generiert Steuersignale für die elektrischen Betriebsmittel der einzelnen Windenergieanlagen in dem Windpark,
- wobei die Simulationseinheit für vorbestimmte Anfangsbedingungen die sich bei anliegenden Steuersignalen ergebenden Istwerte der elektrischen Eigenschaften der einzelnen Windenergieanlagen modelliert.
